# EUROPEAN PATENT APPLICATION

(11) **EP 4 715 786 A1**
(43) Date of publication of application: **25.03.2026**
(21) Application number: 24215451.6
(22) Date of filing: 26.11.2024
(51) Int. Cl.: G09B 19/00, A63B 69/36

(54) **SWING ANALYZING APPARATUS AND SWING ANALYZING PROGRAM**

(30) Priority: 18.09.2024 JP 2024161553
(71) Applicant: Amplus Co., Ltd., Kohoku-hu Yokohama-shi, Kanagawa 2220033 (JP)
(72) Inventor: KURACHI, Nobuhisa, Yokohama (JP)
(74) Representative: Klunker IP Patentanwälte PartG mbB

(57) **Abstract**

To provide a swing analyzing apparatus and a swing analyzing program capable of accurately determining movement of a clubface of a clubhead and a movement trajectory of the clubhead employing existing projectile measuring instruments and the like, without installing a photography apparatus to capture images of a swing from above.

A golf swing analyzing apparatus includes: a feature quantity obtaining unit (21) that obtains a plurality of feature quantities at a point in time when a clubhead 41a of a golf club (41) impacts a golf ball (42) when the golf club (41) is swung, ad an estimating unit (22) that estimates at least one of temporal changes in an angle of a clubface of the clubhead and a movement trajectory of the clubhead (41a), based on the plurality of feature quantities obtained by the feature quantity obtaining unit (21).

## Description

### Technical Field

The present disclosure is related to a swing analyzing apparatus and a swing analyzing program for analyzing temporal changes and movement trajectories of the clubface of a clubhead of a golf club during a swing at impact with a golf ball as well as before and after the impact.

### Background Art

Conventionally, various apparatuses have been proposed to photograph a golfer's swing and provide photographed data. By providing the photographed data of the swing to the golfer, the golfer can be encouraged to improve his or her golf game and to select golf clubs suitable for themselves.

As an example of such an apparatus, Patent Document 1 proposes an apparatus that photographs a golf club and a golf ball from above during a swing of the golf club, detects the clubface of the clubhead in each photographed image, and displays line segments that represent the plurality of detected clubfaces. By displaying the line segments that represent the clubfaces in this manner, it is possible to recognize the opening of the clubface during swinging at impact with a golf ball as well as before and after the impact.

### [Background Art Documents]

### [Patent Documents]

[Patent Document 1] Japanese Unexamined Patent Publication No. 2023-166176

### Summary

### [Technical Problem]

Here, important elements of a golfer's swing include the movement of a clubface of a clubhead during the swing at impact with a golf ball as well as before and after the impact, and the movement trajectory of the clubhead. By recognizing the movement of the clubface of the clubhead and the movement trajectory of the clubhead during the swing at impact with a golf ball as well as before and after the impact, the characteristics of the golfer's swing can be identified, and a golf club can be selected that matches such characteristics.

Although it is possible to display line segments that represent a clubface of a clubhead and to display the movement trajectory of the clubhead with the apparatus disclosed in Patent Document 1 above, it requires a photography apparatus to photograph the swing from above, which increases the size of the apparatus, and in some environments, it is difficult to install a photography apparatus that captures images from above. In addition, labor and costs will be incurred for new installation.

The present disclosure has been developed in view of the foregoing circumstances. The present disclosure provides a swing analyzing apparatus and a swing analyzing program that can determine the movement of a clubface of a clubhead and a movement trajectory with high accuracy using existing golf launch monitors and the like, without installing a photography apparatus to capture images of a swing from above.

### [Solution to the Problem]

A swing analyzing apparatus of the present disclosure is equipped with: a feature quantity obtaining unit for obtaining a plurality of feature quantities at a point in time when a golf ball impacts a clubhead of a golf club when the golf club is swung, and an estimating unit for estimating at least one of temporal changes in an angle of a clubface of a clubhead and a movement trajectory of the clubhead, based on the plurality of feature quantities which are obtained by the feature quantity obtaining unit.

### [Effects of the Disclosure]

According to the swing analyzing apparatus of the present disclosure, when a golf club is swung, a plurality of feature quantities at the time of impact between a golf ball and a clubhead of the golf club are obtained, and at last one of temporal changes in the angle of a clubface of the clubhead and the movement trajectory of the clubhead are estimated based on the plurality of obtained feature quantities. Therefore, the movement of the clubface of the clubhead and the movement trajectory of the clubhead can be obtained with high accuracy by obtaining the feature quantities above employing an existing golf launch monitor or the like, without installing a photography apparatus to capture images of the swing from above.

### Brief Description of the Drawings

Figure 1 is a schematic diagram that illustrates a golf impact analysis system that employs an embodiment of a display control system of the present disclosure.
Figure 2 is a flowchart for explaining the flow of processes performed by the golf impact analysis system illustrated in Figure 1
Figure 3 is a collection of diagrams that illustrate examples of projected images of a plurality of line segments that represent clubfaces and line segments that represent clubhead movement trajectories which are estimated employing eight feature quantities measured by a golf launch monitor.
Figure 4 is a collection of diagrams that illustrate examples of projected images of a plurality of line segments that represent clubfaces and line segments that represent clubhead movement trajectories which are estimated employing five feature quantities measured by a golf launch monitor.
Figure 5 is a collection of diagrams that illustrate examples of projected images of a plurality of line segments that represent clubfaces and line segments that represent clubhead movement trajectories which are estimated employing four feature quantities measured by a golf launch monitor.

### Embodiments of the Disclosure

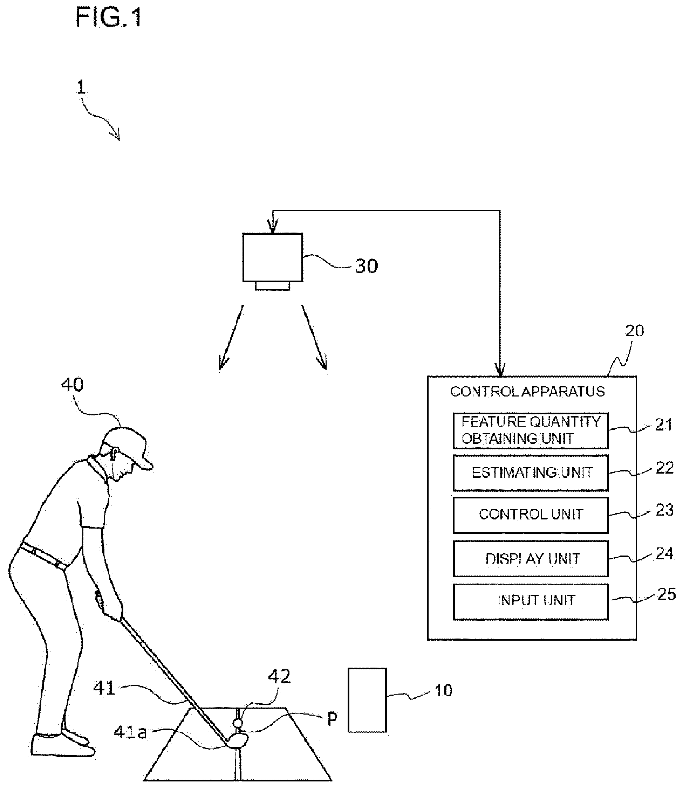

Hereinafter, a golf impact analysis system that employs an embodiment of a swing analyzing apparatus of the present disclosure will be described in detail with reference to the attached drawings. The golf impact analysis system of the present embodiment is characterized by the method of estimating temporal changes in the angle of a clubface of a clubhead and the method of estimating the movement trajectory of the clubhead during a swing. First, the entirety of the golf impact analysis system will be explained. Figure 1 is a schematic diagram that illustrates the golf impact analysis system 1.

As illustrated in Figure 1, the golf impact analysis system 1 of the present embodiment is equipped with a golf launch monitor 10, a control apparatus 20, and a projection apparatus 30. The golf launch monitor 10 and the control apparatus 20, and the control apparatus 20 and the projection apparatus 30 are communicably connected by wired or wireless means, and are configured to exchange various signals.

The golf launch monitor10 measures the speed of a golf ball 42 at a point when the golfer 40 swings a golf club 41 and hits the golf ball 42 (at a point in time of impact), a launch direction, a side spin, a head speed of a clubhead 41a, a club path, a face to target, a face to path and an impact point. Although the golf launch monitor 10 is capable of obtaining more than a dozen measurement items in addition to the eight feature quantities above, in the present embodiment, such feature quantities are not used in the clubface and trajectory information estimation process described below, so descriptions thereof are omitted.

The speed of the golf ball 42 is the speed of the golf ball 42 measured immediately after the clubhead 41a impacts the golf ball 42. The launch direction is the direction in which the golf ball 42 flies out immediately after the clubhead 41a impacts the golf ball 42.

The sidespin is the number of revolutions of lateral rotation of the golf ball 42 immediately after the clubhead 41a impacts the golf ball 42.

The head speed of the clubhead 41a is the speed at which the clubhead 41a is moving at the point time when the clubhead 41a impacts the golf ball 42.

The club path is the trajectory of the clubhead 41a just before the clubhead 41a impacts the golf ball 42.

The face to target is the orientation of the clubface of the clubhead 41a relative to a target line. The target line is a straight line that intersects the golf ball 42 as illustrated in Figure 1, for example.

The face to path is the degree of opening and closing of the clubface of the clubhead 41a relative to the club path.

The impact point is the position where the clubface of the clubhead 41a and the golf ball 42 make contact when the clubhead 41a impacts the golf ball 42.

For example, GCQuad (by Foresight Sports) may be employed as the golf launch monitor 10. GCQuad is capable of measuring the above eight characteristics by capturing the moment of impact between the clubhead of the golf club 41 and a golf ball with four cameras. GCQuad is capable of measuring the above eight feature quantities. However, the golf launch monitor 10 is not limited to GCQuad, and other existing apparatuses may be used.

In addition, instead of measuring the above eight feature quantities with a single golf launch monitor 10, multiple existing golf launch monitor10 may be employed to measure the eight feature quantities. For example, golf launch monitor for measuring trajectory of a golf ball 42 using various technologies such as a general purpose infrared, an X band radar, a K band radar, a laser, a stereo camera, and machine vision, or a measuring apparatus in which three dimensional analysis of the clubhead 41a is performed may be employed.

The control apparatus 20 is constituted by a computer or the like, and is equipped with a CPU (Central Processing Unit), a GPU (Graphics Processing Unit), a semiconductor memory such as a ROM (Read Only Memory) and a RAM (Random Access Memory), storage such as a hard disk, and hardware such as a communication I/F. In the present embodiment, the control apparatus 20 corresponds to the swing analyzing apparatus of the present disclosure.

The control apparatus 20 has a feature quantity obtaining unit 21, an estimating unit 22, a control unit 23, a display unit 24, and an input unit 25.

An embodiment of a swing analyzing program is installed in the semiconductor memory or hard disk of the control apparatus 20. The swing analyzing program is executed by the CPU and GPU, to cause the aforementioned feature quantity obtaining unit 21, the estimating unit 22, and the control unit 23 to function. In the present embodiment, all of the aforementioned functions of each unit are executed by the swing analyzing program. However, the present disclosure is not limited to such a configuration, and some or all of the functions can be executed by an ASIC (Application Specific Integrated Circuit), an FPGA (Field Programmable Gate Array), and hardware such as other electrical circuits.

The following is a detailed description of each component of the control apparatus 20.

The feature quantity obtaining unit 21 obtains a plurality of feature quantities at the point in time when the clubhead 41a of the golf club 41 impacts the golf ball 42 (the point of time of impact) when the golf club 41 is swung. Specifically, the feature quantity obtaining unit 21 in the present embodiment obtains the eight feature quantities measured by the golf launch monitor 10 described above. When the eight features are obtained, the coordinates of a tee position (installation position P illustrated in Figure 1) among the ground space coordinates are also obtained.

The estimating unit 22 estimates temporal changes in the angle of the clubface of the clubhead 41a and the movement trajectory of the clubhead 41a based on the plurality of feature quantities obtained by the feature quantity obtaining unit 21. The angle of the clubface of the clubhead 41a is the angle of the clubface of the clubhead 41a when the clubhead 41a is viewed from above during a swing, and the movement trajectory of the clubhead 41a is the movement trajectory of the clubhead 41a when the clubhead 41a is viewed from above during the swing.

Specifically, the estimating unit 22 in the present embodiment has a learning model obtained by machine learning the relationship between the above eight feature quantities obtained in advance and the temporal changes in the angle of the clubface during the swing and the movement trajectory of the clubhead when such feature quantities are obtained.

The learning model is machine learned using, for example, Liner Regression, but other known methods of machine learning may be used as well.

The estimating unit 22 then estimates the temporal changes in the angle of the clubface of the clubhead 41a and the movement trajectory of the clubhead 41a by inputting the eight feature quantities obtained by the feature quantity obtaining unit 21 to the above learning model.

That is, the estimating unit 22 estimates the temporal change in the angle of the clubface and the clubhead movement trajectory during a certain swing by employing a learning model that has undergone machine learning in advance with eight feature quantities as explanatory variables which are obtained in advance and the temporal change in the angle of the clubface and the movement trajectory of the clubhead as response variables when the eight feature quantities are obtained.

With respect to the eight feature quantities, which are explanatory variables employed in generating the learning model, these feature quantities may be measured using the same apparatus as the golf launch monitor 10 described above. The temporal changes in the angle of the clubface of the clubhead and the movement trajectory of the clubhead, which are the response variables used in generating the learning model, can be obtained, for example, based on the image of the clubhead captured by a photography apparatus from above when the golf club is swung.

In the method for determining the temporal changes in the angle of the clubface of the clubhead based on the captured images of the clubhead taken from above, for example, the toe and heel of the clubhead in the captured images are detected, and line segments connecting the detected toe and heel are determined as the line segments that represent the clubface. For example, the temporal changes in the angle of the clubface can be obtained by obtaining the line segments that represent the clubface from a plurality of images which are captured at above 1000 Frame per second (FPS). In machine learning, the angles of the line segments that represent the clubface are used as the response variables.

The toe and heel may be detected from the captured images by, for example, attaching marks to the clubhead and detecting these marks, or by using a learning model obtained by machine learning captured images with annotations at the toe and heel positions of the clubhead.

In the above description, the line segments that connect the toe and heel of the clubhead are detected as the line segments that represent the clubface. When the golf club is a driver, the boundary line between the clubface and a crown portion of the driver may be detected as the line segment representing the clubface. In this case as well, the above boundary line may be detected using a learning model obtained by machine learning of captured images annotated with the position of the boundary line between the clubface and the crown portion of the clubhead in the captured images. As the machine learning, machine learning of semantic segmentation or key point machine learning that take heat maps into consideration may be employed.

As a method of obtaining the movement trajectory of the clubhead based on the images of the clubhead captured from above, for example, the center coordinates of the line segments that represent the clubface detected from each of the images taken at a frame rate of 1000 FPS as described above may be obtained respectively, and line segments that connect the center coordinates obtained from each of the images may be obtained, to detect the movement trajectory of the clubhead. In machine learning, the center coordinates of the line segments that represent the clubface are used as the response variables.

Note that with respect to the learning model, conversion to cross-frame work machine learning model, such as OPEN Nural Network Exchange an ONNX model may be conducted in order to enable such learning model to be transferred between different deep learning frameworks, promoting interoperability, which gives way to migrating it to other frame work that accelerate processing. In addition, various existing statistical methods may be used to remove outlier values in the learning data.

Next, the control unit 23 is a unit that controls the entirety of the golf impact analysis system 1. Specifically, the control unit 23 communicates with the golf launch monitor 10 via the communication I/F, obtains the eight feature quantities which are measured by the golf launch monitor 10, and inputs the eight feature quantities into the learning model to estimate the temporal changes of the clubface of the clubhead and the movement trajectory of the clubhead.

The control unit 23 generates line segments that represent the pluralities of clubfaces based on the angles of the multiple clubfaces output from the learning model, and generates line segments that connect the plurality of the center coordinates of the plurality of clubfaces based on the center coordinates of the multiple clubfaces output from the learning model.

The control unit 23 communicates with the projection apparatus 30 via the communication I/F and causes the projection apparatus 30 to project the line segments that represent the plurality of clubfaces onto a floor surface in chronological order, and also to generate line segments that connect the center coordinates of the plurality of clubfaces and project these line segments onto the floor surface as the movement trajectory of the clubhead.

The display unit 24 is equipped with a display device, such as a liquid crystal display, for example. The input unit 25 is equipped with an input device such as a mouse or keyboard, for example. The control apparatus 20 may be configured by a tablet device, and the display unit 24 and the input unit 25 may be constituted by a touch panel.

The display unit 24 may also be used to show the line segments that represent the plurality of clubfaces and the movement trajectory of the clubhead described above.

In the present embodiment, the control unit 23 communicates with the golf launch monitor 10 via the communication I/F to obtain the eight feature quantities measured by the golf launch monitor 10. However, the present disclosure is not limited to such a configuration, and the eight feature quantities which are measured by the golf launch monitor 10 may be set and input by a user by employing the input unit 25.

Returning to Figure 1, the projection apparatus 30 consists of a projector or a laser beam illuminator, and projects and displays line segments that represent the clubface of the clubhead 41a and the movement trajectory of the clubhead together onto the floor surface by control by the control unit 23 of the control apparatus 20, as described above.

The projection apparatus 30 is installed such that it can project and display line segments that represent the clubface of the clubhead 41a and the movement trajectory of the clubhead in a predetermined projection area that includes a setting position P of the golf ball 42 in the vicinity of the center on the floor surface. The projection apparatus 30 may be installed on a support column, such as a stand, for example, or on the ceiling.

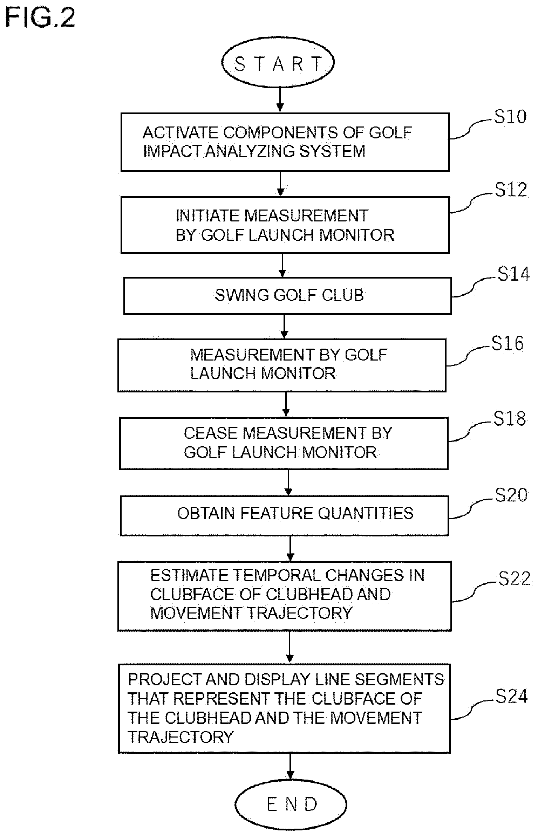

Next, the flow of processes which are performed by the golf impact analysis system 1 will be explained with reference to the flowchart illustrated in Figure 2.

First, each component of the golf impact analysis system 1 is activated (S10). Next, a golfer stands near the tee position P of the golf ball 42 and places a golf ball 42 at the tee position P as illustrated in Figure 1.

Then, a user sets and inputs a measurement initiation command for the golf launch monitor 10, and the measurement by the golf launch monitor 10 is initiated (S12).

After the measurement by the golf launch monitor 10 is initiated, the golfer swings a golf club 41 and hits the golf ball 42 (S14).

During the time that the golfer is swinging the golf club 41, measurement by the golf launch monitor 10 is performed (S16), and the eight feature quantities described above are output to the control apparatus 20. The golf launch monitor 10 ceases measurement as soon as a preset amount of time has elapsed since the initiation of measurement (S18). In this process, the coordinates of the location of the tee (the installation position P illustrated in Figure 1) are also employed. The first few shots measured by launch monitor 10 may provide P position along with 8 feature quantities that can be used for calibrating P position and its coordinate so that the projection mapping can be generated according to its actual position of each element.

The eight feature quantities which are output from the golf launch monitor 10 are input to the control apparatus 20 and obtained by the feature quantity obtaining unit 21 (S20). The estimating unit 22 then inputs the eight feature quantities obtained by the feature quantities obtaining unit 21 into the learning model described above to estimate temporal changes in the angle of the clubface of the clubhead 41a and the movement trajectory of the clubhead 41a (S22). Specifically, the estimating unit 22 estimates and outputs the angles of the plurality of clubfaces in temporal series as the temporal changes in the angles of the clubfaces, and estimates and outputs the center coordinates of the plurality of clubfaces as the movement trajectory of the clubhead.

Then, the control unit 23 generates line segments that represent the plurality of clubfaces arranged in chronological order based on the angles of the multiple clubfaces output from the estimating unit 22, generates line segments representing the movement trajectory of the clubhead by connecting the center coordinates of the plurality of clubfaces, and projects and displays these line segments together on the floor surface by the projection apparatus 30 (S24).

In the above embodiment, the temporal changes of the clubface of the clubhead and the movement trajectory of the clubhead are estimated, but only at least one of these may be estimated.

In the above embodiment, the speed of the golf ball, the launch direction, the side spin, the head speed of the clubhead, the club path, the face to target, the face to path and the impact point are used as the eight feature quantities. However, the present disclosure is not limited to such a configuration, and other feature quantities may be added or replaced as long as they are measured at the point in time of impact between the clubhead of the golf club and the golf ball. It is preferable for the number of feature quantities to be eight or more, but may be five or four, for example. The number of feature quantities which are employed to perform machine learning of the learning model may be changed in accordance with the number of feature quantities to be input to the learning model.

Next, examples of projected images which are projected onto the floor surface by the above embodiment will be described.

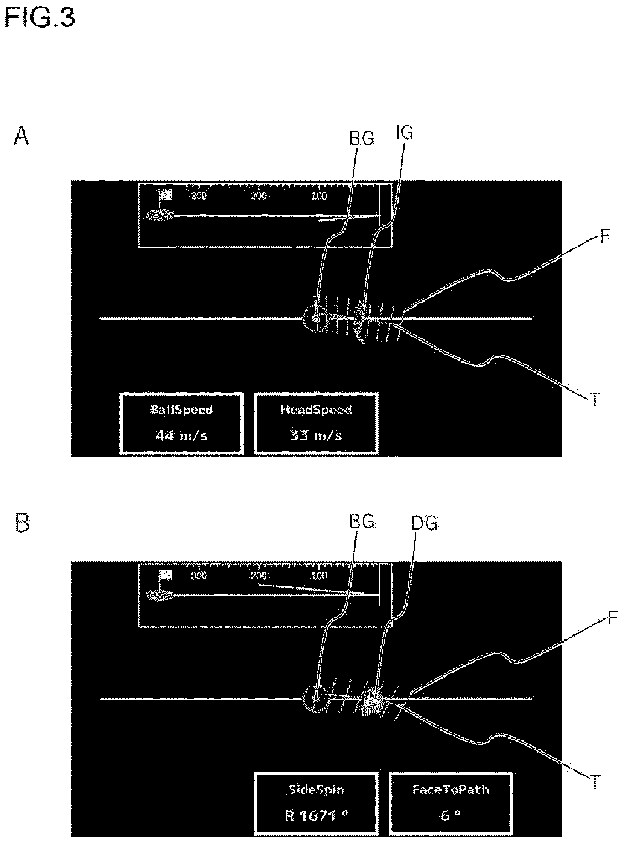

Figures 3A and 3B illustrate examples of projected images of line segments F that represent a plurality of clubfaces and line segments that represent a movement trajectory T of the clubhead 41a, estimated by measuring eight feature quantities using GCQuad (by Foresight Sports) as the golf launch monitor 10 as described above and inputting these feature quantities into the learning model.

Figure 3A illustrates an example of a projected image when an iron is employed as a golf club 41, and a three dimensional image IG of the clubhead of the iron and a three dimensional image BG of a golf ball are projected together with the line segments F that represent the clubface and the movement trajectory T of the clubhead. The three dimensional image IG of the clubhead moves along the movement trajectory T of the clubhead toward the three dimensional image BG of the golf ball, and when it reaches the three dimensional image BG of the golf ball, the three dimensional image BG of the golf ball moves in the launch direction. Note that in Figure 3A, the line segments F that represent the clubface of the clubhead and the movement trajectory T are displayed up to the position of the three dimensional image BG of the golf ball. However, the line segments F that represent the clubface of the clubhead and the movement trajectory T may continue to be estimated and displayed after the clubhead reaches the golf ball.

Figure 3B illustrates an example of a projected image when a driver is employed as a golf club 41, and a three dimensional image DG of the clubhead of the driver and a three dimensional image BG of the golf ball are projected together with the line segments F that represent the clubface and the movement trajectory T of the clubhead. The three dimensional image DG of the clubhead moves along the movement trajectory T of the clubhead toward the three dimensional image BG of the golf ball, and when it reaches the three dimensional image BG of the golf ball, the three dimensional image BG of the golf ball moves in the launch direction. In the example illustrated in Figure 3B as well, the line segments F that represent the clubface of the clubhead and the movement trajectory T may continue to be estimated and displayed after the clubhead reaches the golf ball.

According to experiments conducted by the Applicant, the line segments F that represent the clubface of the clubhead and the line segment representing the movement trajectory T of the clubhead in the projected images illustrated in Figures 3A and 3B closely approximate line segments that represent a clubface and a movement trajectory of a clubhead obtained from images of the clubhead captured from above. It was found that the actual temporal changes in the angle of the actual clubface of the clubhead 41a and the movement trajectory of the clubhead were represented with high accuracy.

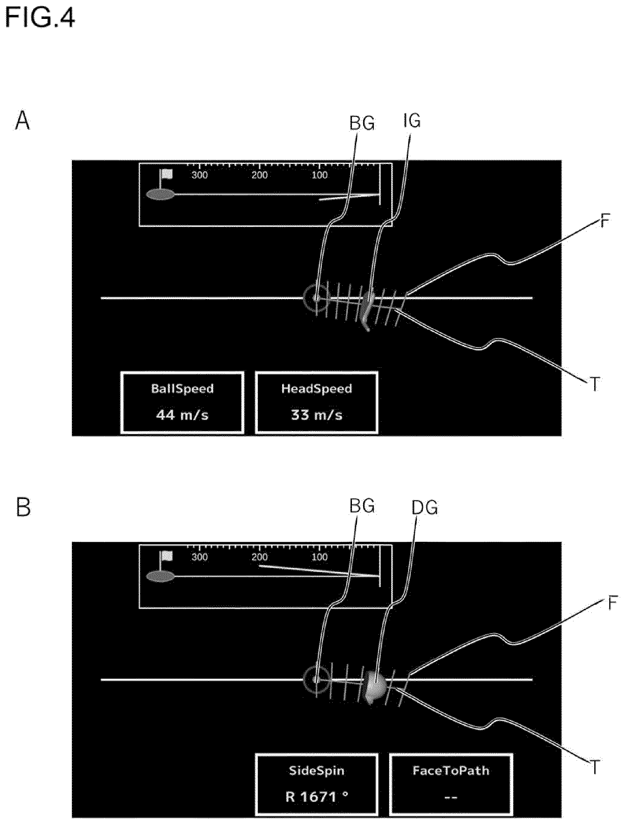

Next, Figures 4A and 4B illustrate examples of projected images of line segments F that represent a plurality of clubfaces and line segments that represents the movement trajectory T of the clubhead 41a, estimated by measuring five feature quantities (a ball speed, a launch direction, a side spin, a head speed, and a club path) using the GC3 (by Foresight Sports) as the golf launch monitor 10 and inputting these feature quantities into the learning model.

Figure 4A illustrates an example of projected images when an iron is employed as a golf club 41, and Figure 4B illustrates an example of projected images when a driver is employed as a golf club 41. The projection and movement of a three dimensional image IG of the iron clubhead, a three dimensional image DG of the driver clubhead, and the three dimensional image BG of the golf ball are the same as in the examples illustrated in Figures 3A and 3B. In the examples illustrated in Figure 4A and Figure 4B as well, line segments F that represent the clubface of the clubhead and the movement trajectory T may continue to be estimated and displayed after the clubhead reaches the golf ball.

According to experiments conducted by the applicant, the line segments F that represent the clubface of the clubhead 41a and the line segments that represent the movement trajectory T of the clubhead in the projected images illustrated in Figures 4A and 4B differed somewhat in the accuracy of the positions and the angles of the line segments that represent the clubface and the curvature of the movement trajectory T when compared with the examples of the projected images illustrated in Figures 3A and 3B that employed eight feature quantities. However, it was confirmed that the differences were not particularly problematic.

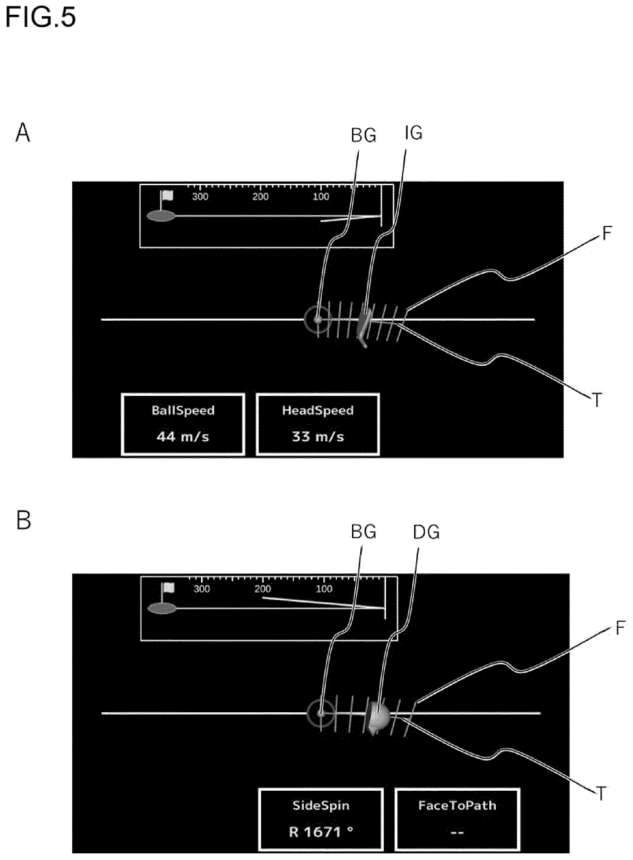

Next, Figures 5A and 5B illustrate examples of projected images of line segments F that represent a plurality of clubfaces and line segments that represent the movement trajectory T of the clubhead, estimated by measuring four characteristics (a ball speed, a launch direction, a side spin, and a head speed) using GCQuad (by Foresight Sports) or GC3 (by Foresight Sports) as the golf launch monitor 10, and then inputting these feature quantities into the learning model. Note that a measurement apparatus with fewer measurement items than GCQuad or GC3 may be employed as the golf launch monitor 10.

Figure 5A illustrates an example of projected images when an iron is employed as a golf club 41, and Figure 5B illustrates an example of projected images when a driver is employed as a golf club 41. The projection and movement of a three dimensional image IG of the iron clubhead, a three dimensional image DG of the driver clubhead, and the three dimensional image BG of the golf ball are the same as in the examples illustrated in Figures 3A and 3B. In the examples illustrated in Figure 4A and Figure 4B as well, line segments F that represent the clubface of the clubhead and the movement trajectory T may continue to be estimated and displayed after the clubhead reaches the golf ball.

According to experiments conducted by the Applicant, the line segments F that represent the clubface of the clubhead 41a and the line segments that represent the movement trajectory T of the clubhead in the projected images illustrated in Figures 5A and 5B differed somewhat in the accuracy of the positions and the angles of the line segments F that represent the clubface and the curvature of the movement trajectory T when compared with the examples of the projected images illustrated in Figures 3A and 3B that employed eight feature quantities and the examples of the projected images illustrated in Figures 4A and 4B that employed five feature quantities. However, it was confirmed that the differences were not particularly problematic.

As described above, the experiments conducted by the Applicant have demonstrated that the greater the number of feature quantities, the higher the accuracy of the line segments F that represent the clubface and the movement trajectory T of the clubhead.

According to the golf impact analysis system of the above embodiment, a plurality of feature quantities at the point of impact between the clubhead 41a of the golf club 41 and the golf ball 42 when the golf club 41 is swung are obtained, and at least one of temporal changes in the angle of the clubface of the clubhead 41a and a movement trajectory of the clubhead 41a is estimated based on the plurality of feature quantities. Therefore, by obtaining the above feature quantities employing an existing golf launch monitor 10 or the like, the movement of the clubface of the clubhead 41a and the movement trajectory of the clubhead 41a can be obtained with high accuracy without installing a photography apparatus for capturing pictures of the swing from above.

In addition, in the golf impact analysis system of the above embodiment, the temporal changes in the angle of the clubface of the clubhead 41a and the movement trajectory of the clubhead 41a are estimated by inputting multiple feature quantities into a learning model obtained by machine learning in advance. Therefore, the temporal changes in the angle of the clubface and the movement trajectory of the clubhead 41a can be estimated with higher accuracy.

Further, in the golf impact analysis system of the above embodiment, the golf ball speed, the launch direction, the side spin, the head speed of the clubhead, the club path, the face to target, the face to path, and the impact point are employed as feature quantities. Therefore, these feature quantities are capable of being measured by the existing golf launch monitor 10, and the temporal changes in the angle of the clubface and the movement trajectory of the clubhead 41a can be estimated with higher accuracy.

Note that in the above embodiment, the eight feature quantities described above are employed. However, if a closure rate of clubface prior to impact is measurable by the golf launch monitor 10, the closure rate may be added as a feature quantity. The closure rate is the degree of rotation (opening/closing rate) of the clubface as the clubhead moves toward the impact position, and is measured as a relative value to the club path.

Since the closure rate is the rate of change of the clubhead clubface measured by three dimensional 6dof (degrees of freedom), it cannot be employed immediately for the two dimensional display of the clubface as illustrated in Figures 3 through 5. However, in the above embodiment, the closure rate is employed as an explanatory variable in the learning model. Therefore, the closure rate may be used for the two dimensional display of the clubface.

The experiments conducted by the Applicant have demonstrated that the temporal changes in the angle of the clubface of the clubhead after impact and the movement trajectory can be obtained with higher precision in the case that the closure rate is employed.

Here, it is known that one of the major factors of miss shots caused by impact whereby the impact point is off the center of the clubhead clubface in the toe or heel direction is that the clubface of the clubhead is tilted back unevenly by gravity of a golf ball that causing the one side of the clubhead to toe or heel to tilt back and the other sided the clubhead to tilt forward, preventing the golf ball to be hit in a straight direction. In recent years, golf clubs designed to have a large MOI (moment of inertia) have been introduced in the market in order to provide resistance to this impact loss, and it has become possible to hit straight shots more consistently even if a shot is a miss shot, in which impact with a golf ball is off center of the clubface (an off center shot).

By displaying the temporal changes in the angle of the clubface of the clubhead after impact and the movement trajectory with higher accuracy as described above, it is possible to display on the floor how much the clubhead was tilted back after impact, which is extremely effective when golf clubs are compared to each other from the viewpoint of seeing the effects of MOI.

In addition, in the golf impact analysis system of the above embodiment, as temporal changes in the angle of the clubface, a plurality of line segments that represent the clubface are displayed in projection in chronological order, such that the temporal change in the angle of the clubface can be recognized more clearly.

Further the golf impact analysis system of the above embodiment, line segments that represent the movement trajectory of the clubhead 41a are projected and displayed as the movement trajectory of the clubhead 41a, such that the movement trajectory of the clubhead 41a can be recognized more clearly.

Note that the present disclosure is not limited to the above embodiments, but may be realized by modifying the components to an extent that it does not depart from the spirit thereof at the implementation stage. Also, various inventions may be formed by appropriate combinations of the plurality of components disclosed in the above embodiments. For example, all of the components described in the embodiments may be combined as appropriate. It is, of course, possible to make various modifications and applications within the scope that does not depart from the spirit of the disclosure.

With respect to the present disclosure, the following items are further disclosed with respect to the present disclosure.

### (Item 1)

A swing analyzing apparatus of the present disclosure is equipped with a feature quantity obtaining unit for obtaining a plurality of feature quantities at a point in time when a clubhead of a golf club impacts a golf ball when a golf club is swung, an estimating unit for estimating at least one of temporal changes in an angle of a clubface of the clubhead and a movement trajectory of the clubhead, based on the plurality of feature quantities obtained by the feature quantity obtaining unit.

### (Item 2)

In the swing analyzing apparatus according to Item 1, the estimating unit may estimate at least one of the temporal changes in the angle of the clubface of the clubhead and the movement trajectory of the clubhead by inputting the plurality of feature quantities which are obtained by the feature quantity obtaining unit into a learning model which is obtained by machine learning the relationship between a plurality of feature quantities obtained in advance and at least one of the temporal changes in the angle of the clubface of the clubhead and the movement trajectory of the clubhead during a swing when these feature quantities are obtained.

### (Item 3)

In the swing analyzing apparatus according to Item 1 or 2, the plurality of feature quantities may include at least one of a golf ball speed, a launch direction, a side spin, a head speed of the clubhead, a club path, a face to target, a face to path, an impact point, and a closure rate.

### (Item 4)

In the swing analyzing apparatus according to any one of Items 1 to 3, the plurality of feature quantities may include all of the following: a golf ball speed, a launch direction, a side spin, a head speed of the clubhead, a club path, a face to target, a face to path, and an impact point.

### (Item 5)

The swing analyzing apparatus according to any one of Items 1 to 4 may be equipped with a display control unit that displays at least one of the temporal changes in the angle of the clubface of the clubhead and the movement trajectory of the clubhead estimated by the estimating unit.

### (Item 6)

In the swing analyzing apparatus according to Item 5, the display control unit may display the plurality of line segments that represent the clubface in chronological order as temporal changes in the angle of the clubface.

### (Item 7)

In the swing analyzing apparatus according to Item 5 or 6, the display control unit may display line segments that represent the movement trajectory of the clubhead as the movement trajectory of the clubhead.

### (Item 8)

A swing analyzing program of the present disclosure causes a computer to execute the steps of obtaining a plurality of feature quantities at a point in time when a clubhead of a golf club impacts a golf ball when the golf club is swung, and estimating at least one of temporal changes in the angle of a clubface of the clubhead and a movement trajectory of the clubhead based on the plurality of obtained feature quantities.

### [Explanation of the Reference Numerals]

- 1: golf impact analysis system
- 10: golf launch monitor
- 20: control apparatus
- 21: feature quantity obtaining unit
- 22: estimating unit
- 23: control unit
- 24: display unit
- 25: input unit
- 30: projection apparatus
- 40: golfer
- 41: golf club
- 41a: clubhead
- 42: golf balls
- F: line segments that represent a clubface
- P: tee position
- T: clubhead travel trajectory

## Claims

1. A swing analyzing apparatus comprising;
a feature quantity obtaining unit (21) for obtaining a plurality of feature quantities at a point in time when a clubhead (41a) of a golf club (41) impacts a golf ball (42) when a golf club (41) is swung; and
an estimating unit (22) for estimating at least one of temporal changes in an angle of a clubface of the clubhead (41a) and a movement trajectory of the clubhead (41a), based on the plurality of feature quantities obtained by the feature quantity obtaining unit (21).

2. The swing analyzing apparatus according to Claim 1, wherein:
the estimating unit (22) estimates at least one of the temporal changes in the angle of the clubface of the clubhead (41a) and the movement trajectory of the clubhead (41a) by inputting the plurality of feature quantities which are obtained by the feature quantity obtaining unit (21) into a learning model which is obtained by machine learning the relationship between a plurality of feature quantities obtained in advance and at least one of the temporal changes in the angle of the clubface of the clubhead (41a) and the movement trajectory of the clubhead (41a) during a swing when these feature quantities are obtained.

3. The swing analyzing apparatus according to Claim 1 or 2, wherein:
the plurality of feature quantities include at least one of a golf ball speed, a launch direction, a side spin, a head speed of the clubhead (41a), a club path, a face to target, a face to path, an impact point, and a closure rate.

4. The swing analyzing apparatus according to any one of Claims 1 to 3, wherein:
the plurality of feature quantities include all of a golf ball speed, a launch direction, a side spin, a head speed of the clubhead (41a), a club path, a face to target, a face to path, and an impact point.

5. The swing analyzing apparatus according to any one of Claims 1 to 4, further comprising:
a display control unit (23) that displays at least one of the temporal changes in the angle of the clubface of the clubhead (41a) and the movement trajectory of the clubhead (41a) estimated by the estimating unit (22).

6. The swing analyzing apparatus according to Claim 5, wherein:
the display control unit (23) displays the plurality of line segments that represent the clubface in chronological order as temporal changes in the angle of the clubface.

7. The swing analyzing apparatus according to Claim 5, wherein:
the display control unit (23) displays line segments that represent the movement trajectory of the clubhead (41a) as the movement trajectory of the clubhead (41a).

8. A swing analyzing program that causes a computer to execute the steps of:
obtaining a plurality of feature quantities at a point in time when a clubhead (41a) of a golf club (41) impacts a golf ball when the golf club (41) is swung; and
estimating at least one of temporal changes in the angle of a clubface of the clubhead (41a) and a movement trajectory of the clubhead (41a) based on the plurality of obtained feature quantities.
